# EUROPEAN PATENT APPLICATION

(11) **EP 2 427 014 A1**
(43) Date of publication of application: **07.03.2012**
(21) Application number: 09843823.7
(22) Date of filing: 28.04.2009
(51) Int. Cl.: H04W 72/08

(54) **METHOD, MCE AND BASE STATION FOR DYNAMICALLY DISPATCHING WIRELESS RESOURCES FOR MBSFN TRANSMISSION**

(71) Applicant: Alcatel Lucent, 75007 Paris (FR)
(72) Inventor: WANG, He, Shanghai 201206 (CN)
(74) Representative: 2SPL Patentanwälte
(86) International application number: PCT/CN2009/000451
(87) International publication number: WO 2010/124411

(57) **Abstract**

A method for dynamically dispatching radio resources used for Multicast Broadcast Single Frequency Network (MBSFN) transmissions for Multimedia Broadcast Multicast Service (MBMS) is provided, comprising: for a current dispatching period, determining, by a Multi-Cell/Multicast Coordination Entity (MCE), semi-static MBMS dispatching information for each MBMS service or each MBMS service group, according to the Quality of Service (QoS) requirements of each MBMS service or each MBMS service group used for MBSFN transmission, wherein said MBMS service group is a service group formed by statistically multiplexing a plurality of MBMS services that have the same Block Error Rate as their QoS requirements; informing, by said MCE, each base station and respective mobile stations under the control of each base station in an MBSFN area of the determined semi-static MBMS dispatching information; and, dispatching, by each base station, the radio resources dynamically, according to the semi-static MBMS dispatching information received from the MCE and actual data volume to be processed by each MBMS service or each MBMS service group.

## Description

### Field of the Invention

The present invention relates to the field of wireless communication. And more particularly, the present invention relates to a method, a Multi-Cell/Multicast Coordination Entity (MCE) and a Base Station (eNB) for dynamically dispatching the radio resources used for Multicast Broadcast Single Frequency Network (MBSFN) transmissions for Multimedia Broadcast Multicast Service (MBMS), which may better meet the Quality of Service (QoS) requirements of the MBMS services and may achieve a more efficient utilization of the radio resources.

### Background of the Invention

As is well known, MBSFN transmission for Enhanced Multimedia Broadcast Service (eMBMS) has been agreed to be an essential feature of Release 9 of eMBMS. In order for efficient and proper MBSFN transmissions, it's required to transmit the same content data packet over the air using same radio resources at the same time. Clearly, for an MBSFN transmission, the coordination between a plurality of involved eNBs (Base Stations) is required, which includes resource allocation, radio configuration and dispatching. On the other hand, in view of the gain of the radio resource efficiency, the Release 9 of eMBMS also supports service multiplexing. It is still a problem to be addressed as to how to carry out a dynamic dispatching to meet the requirements for MBSFN transmissions and to improve the efficiency of the radio resources.

### Summary of the Invention

The invention is proposed to overcome the drawbacks in the prior art. It is an objective for the invention to propose a method, an MCE and a Base Station for dynamically dispatching the radio resources used for Multicast Broadcast Single Frequency Network (MBSFN) transmissions for Multimedia Broadcast Multicast Service (MBMS), which may better meet the QoS requirements of the MBMS services and achieve an efficient utilization of the radio resources.

To achieve the above objective, a method for dynamically dispatching radio resources used for Multicast Broadcast Single Frequency Network (MBSFN) transmissions for Multimedia Broadcast Multicast Service (MBMS) is provided according to the invention, including: determining , by a Multi-Cell/Multicast Coordination Entity (MCE), for a current dispatching period, semi-static MBMS dispatching information for each MBMS service or each MBMS service group, according to Quality of Service (QoS) requirements of each MBMS service or each MBMS service group used for MBSFN transmission, wherein the MBMS service group is a service group formed by statistically multiplexing a plurality of MBMS services that have the same Block Error Rate as their QoS requirements; informing, by the MCE, each base station and respective mobile stations under the control of each base station in an MBSFN area of the determined semi-static MBMS dispatching information; and dispatching, by each base station, the radio resources dynamically according to the semi-static MBMS dispatching information received from the MCE and actual data volume to be processed by each MBMS service or each MBMS service group.

Preferably, the semi-static MBMS dispatching information includes: transmission sequence information for each MBMS service or each MBMS service group, MBMS subframe allocation pattern (MSAP) information and Modulation and Coding Solution (MCS) information, wherein the MSAP information indicates the maximal range of allocated MBSFN subframes used for MBSFN transmission for each MBMS service or each MBMS service group.

Preferably, there is an internal transmission sequence used for MBSFN transmission for each MBMS service forming the MBMS service group, wherein the internal transmission sequence is determined by the MCE according to the QoS requirements of each MBMS service forming the MBMS service group.

Preferably, dispatching the radio resources dynamically includes: if the actual data volume to be processed by each MBMS service or each MBMS service group does not occupy all the MBSFN subframes allocated for the MBMS service or the MBMS service group indicated by the MSAP information, using MBSFN subframes being unoccupied for unicast services; and if the actual data volume to be processed by each MBMS service or each MBMS service group does not fill up all the MBSFN subframes allocated for the MBMS service or the MBMS service group indicated by the MSAP information, adding filling data only into the last MBSFN subframe for the MBMS service, or adding filling data only into the last MBSFN subframe for the last MBMS service among all the MBMS services forming the MBMS service group.

Preferably, for each MBMS service, the MSAP information and the MCS information are determined according to Guaranteed Bit Rate (GBR) or Maximal Bit Rate (MBR) for the MBMS service; for each MBMS service group, the MSAP information and the MCS information are determined according to the QoS requirements of Aggregative Group Bit Rate and Block Error Rate for the MBMS service group; and the transmission sequence information is determined according to priority level or delay for each MBMS service or each MBMS service group.

Preferably, the internal transmission sequence is determined by priority level or delay of each MBMS service forming the MBMS service group.

Preferably, informing, by the MCE, each base station and respective mobile stations under the control of each base station in an MBSFN area of the determined semi-static MBMS dispatching information includes: informing, by the MCE, each base station in the MBSFN area of the semi-static MBMS dispatching information via an M2 interface; and transmitting, by each base station, the semi-static MBMS dispatching information received by the base station from the MCE to respective mobile stations through Radio Resource Control (RRC) signaling via a Uu interface.

Preferably, informing, by the MCE, each base station in the MBSFN area of the semi-static MBMS dispatching information via an M2 interface includes: transmitting a semi-static MBMS dispatching information message including the semi-static MBMS dispatching information to each base station from the MCE via the M2 interface; and receiving, by each base station, the semi-static MBMS dispatching information message from the MCE over the M2 interface and feeding back, by the base station, a semi-static MBMS dispatching information response message to indicate whether the semi-static MBMS dispatching information message has been received correctly.

Preferably, the RRC signaling includes: MBMS modified service information signaling, MBMS unmodified service information signaling and Point to Multipoint Radio Bearer (PTM RB) information signaling for the current cell.

Preferably, result of the dynamic dispatching obtained from the dynamic dispatching of the radio resources by each base station is transmitted to respective mobile stations from the base station utilizing an "MBMS dispatching information media accessing control MAC element", for the mobile stations to receive from the base station and decode desired MBMS service or MBMS service group.

Furthermore, Multi-Cell/Multicast Coordination Entity (MCE) for dynamically dispatching radio resources used for Multicast Broadcast Single Frequency Network (MBSFN) transmissions for Multimedia Broadcast Multicast Service (MBMS) is provided according to the invention, including: a dispatching information determining means for determining, for a current dispatching period, semi-static MBMS dispatching information for each MBMS service or each MBMS service group, according to Quality of Service (QoS) requirements of each MBMS service or each MBMS service group used for MBSFN transmission, wherein the MBMS service group is a service group formed by statistically multiplexing a plurality of MBMS services that have the same Block Error Rate as their QoS requirements; and a dispatching information transmitting means for transmitting a semi-static MBMS dispatching information message including the semi-static MBMS dispatching information to each base station in an MBSFN area.

Preferably, the MCE further includes: a feedback receiving means for receiving a semi-static MBMS dispatching information response message fed back from each base station, to determine whether the semi-static MBMS dispatching information message transmitted to the base station has been received correctly.

Furthermore, a base station for dynamically dispatching radio resources used for Multicast Broadcast Single Frequency Network (MBSFN) transmissions for Multimedia Broadcast Multicast Service (MBMS) is provided according to the invention, including: a dispatching information receiving means for receiving a semi-static MBMS dispatching information message from a Multi-Cell/Multicast Coordination Entity (MCE), wherein the semi-static MBMS dispatching information message includes the semi-static MBMS dispatching information for each MBMS service or each MBMS service group determined by the MCE according to the Quality of Service (QoS) requirements of each MBMS service or each MBMS service group used for MBSFN transmission; and a dynamic dispatching means for dynamically dispatching the radio resources, for a current dispatching period, according to the semi-static MBMS dispatching information included in the received semi-static MBMS dispatching information message and actual data volume to be processed by each MBMS service or each MBMS service group.

Preferably, the base station further includes a dispatching information transmitting means for transmitting the received semi-static MBMS dispatching information to respective mobile station through Radio Resource Control (RRC) signaling; and a feedback means for feeding back a semi-static MBMS dispatching information response message to the MCE to indicate whether the semi-static MBMS dispatching information message has been received correctly.

### Brief Description of the Drawings

The above objectives, advantages and features of the present invention will become more apparent from following detailed description for preferred embodiments in conjunction with the accompanying drawings in which
FIG. 1 is a flow diagram of a method for dynamically dispatching the radio resources used for MBSFN transmissions for MBMS according to the present invention;
FIG. 2 is a sequence diagram of the procedure for informing a base station and respective mobile stations under the control of the base station of the semi-static MBMS dispatching information from an MCE via an M2 interface or a Uu interface;
FIG. 3 is a sequence diagram of the procedure for informing the base station of the semi-static MBMS dispatching information from the MCE via the M2 interface according to the present invention;
FIG. 4 is schematic diagram of an exemplary message structure of the semi-static MBMS dispatching information message transmitted from the MCE to the base station according to the present invention;
FIG. 5 is schematic diagram of an example of the operation for dynamically dispatching the radio resources used for MBSFN transmissions for MBMS according to the present invention;
FIG. 6 is a structural diagram of the MCE for dynamically dispatching the radio resources used for MBSFN transmission for MBMS according to the present invention; and
FIG. 7 is a structural diagram of the base station for dynamically dispatching the radio resources used for MBSFN transmissions for MBMS according to the present invention.

### Detailed Description of the Invention

The present invention presents a mechanism for dynamically dispatching radio resources. This mechanism not only takes into account the radio resource efficiency, dispatching impartiality and requirements for MBSFN transmission coordination, but also takes into account related signaling between the MCE, the eNB and the UEs (mobile stations) via the M2 interfaces and the Uu interfaces.

It should be understood that, according to the present invention, the operation configuration for the eMBMS dispatching and the MBSFN transmission is shown as below.
1) An MCE is defined as a logical function entity for the radio resource allocation for all eNBs in an MBSFN area for MBSFN transmissions. Also, further details of radio configuration for the MBSFN transmissions such as the MCS (Modulation and Coding Scheme) are determined by the MCE. The MCE is a central coordination entity for all eNBs involved in an MBSFN transmission.
2) The eMBMS dispatching is periodical with one dispatching period 320ms, for example. Furthermore, as known in the art, an MBMS service and unicast may be multiplexed in a mixed carrier using the TDM (Time Division Multiplexing) mode.
3) In each dispatching period, the allocation information for MBSFN subframes that are defined to be able to perform the MBSFN transmission, which is also called MSAP (MBMS Subframe Allocation Pattern) information, is determined. The MSAP information is semi-static and is determined by the MCE. This MSAP information defines the maximal range of allocated MBSFN subframes capable for the MBSFN transmission.
4) The MBSFN transmission for MBMS should only present in the MBSFN subframes preconfigured by the MBSFN subframe allocation pattern of system information SIB2 ("System Information Block type 2"), i.e. in the MBSFN subframe range indicated by the MSAP information. The #0, #4, #5 and #9 subframes within one radio subframe should be precluded before the MBSFN subframe allocation.

The preferred embodiments of the invention will be described with reference to the drawings.

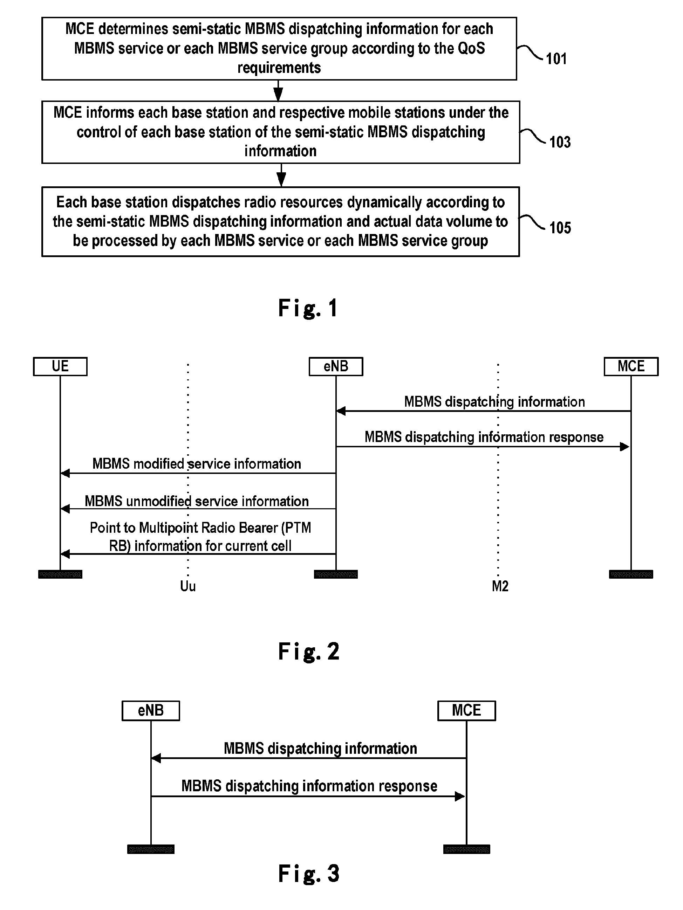

FIG. 1 is a flow diagram of a method for dynamically dispatching the radio resources used for MBSFN transmissions for MBMS according to the present invention.

As shown in FIG. 1, according to the method for dynamically dispatching the radio resources of the present invention, in step 101, for the current dispatching period, the MCE determines the semi-static MBMS dispatching information for each MBMS service or each MBMS service group, according to the Quality of Service (QoS) requirements of each MBMS service or each MBMS service group used for MBSFN transmission.

Here, it should be noted that, the MBMS services used for MBSFN transmission may be categorized into two types. One type is called statistically multiplexed service and the other type is called non-statistically multiplexed service. Those services with the same QoS requirement of Block Error Rate (BLER), for example, with the same modulation scheme, should be multiplexed into an MAC PDU (Media Access Control-Protocol Data Unit). This is called statistically multiplexing. All services that are statistically multiplexed into one MAC PDU may be defined as one service group. When determining the MASP, the MCE may regard this service group as one "service" to operate. Accordingly, the "MBMS service" in the "each MBMS service or each MBMS service group" refers to a non-statistically multiplexed service, while the "MBMS service group" therein refers to a service group formed by statistically multiplexing a plurality of MBMS services with the same QoS requirement of Block Error Rate.

According to the QoS requirement for each MBMS service or each MBMS service group, the semi-static MBMS dispatching information determined by the MCE may include three kinds of information, i.e. transmission sequence information for each MBMS service or each MBMS service group, MSAP information, and Modulation and Coding Scheme (MCS) information.

The transmission sequence includes an internal transmission sequence for each MBMS service within an MBMS service group and a service sequence for all MBSFN transmissions in the MBSFN area. For the service sequence for all MBSFN transmissions, a statistically multiplexed service group may be regarded as one service to arrange. For example, it is assumed that there are five MBSFN transmission services represented by S1, S2, S3, S4 and S5, among which S1, S3 and S4 are statistically multiplexed services and belong to one service group {S1, S3, S4}. Then the QoS requirement, such as priority level or delay, for each MBMS service within the MBMS service group is considered. In this service group, the internal transmission sequence is {S3, S1, S4}. With respect to the service sequence for all MBSFN transmissions, the final transmission sequence determined by the MCE will be {S5, {S3, S1, S4}, S2}.

Here, the MSAP information indicates the maximal range of allocated MBSFN subframes used for MBSFN transmission for each MBMS service or each MBMS service group. For the MSAP information, one statistically multiplexed service group may also be regarded as one service to make the determination. The MCE may determine the MCS information and the MSAP information, according to the QoS requirement for each MBMS service, such as the Guaranteed Bit Rate (GBR) or the Maximal Bit Rate (MBR) and the BLER requirements for a non-statistically multiplexed service and the Aggregative Group Bit Rate (ABBR) and BLER requirements for a statistically multiplexing service. The subframes dynamically dispatched for an MBMS service or an MBMS service group will not exceed the subframe range of the MBSFN subframe allocation indicated by the MSAP information. Accordingly, the MSAP information is used to limit the subframe range of the MBSFN transmission for each MBMS service or each MBMS service group. For example, if in MSAP information for a dispatching period, there are three subframes defined for one MBMS service, this means that for this MBMS service, subsequent dynamic dispatching will not exceed three subframes.

Next, in step 103 of Fig. 1, said MCE informs each base station and respective mobile stations under the control of the base station in the MBSFN area of the determined semi-static MBMS dispatching information.

Turning to FIG. 2, FIG. 2 is a sequence diagram of the procedure for informing the base station and respective mobile stations under the control of the base station of the semi-static MBMS dispatching information from the MCE via an M2 interface or a Uu interface.

As shown in FIG. 2, said semi-static MBMS dispatching information is transmitted from the MCE to each base station in the MBSFN area via the M2 interface between the MCE and the eNB, such as via the MBMS dispatching information. The eNB receives the semi-static MBMS dispatching information message from the MCE, and updates the configuration of the eNB and related RRC information according to the particular contents in the semi-static MBMS dispatching information message. Considering this notification and MBMS point to multipoint control channel (MCCH) message period transmission mechanism, each base station transmits the semi-static MBMS dispatching information to respective UEs via different Radio Resource Control (RRC) signaling such as MBMS modified service information signaling, MBMS unmodified service information signaling and Point to Multipoint Radio Bearer (PTM RB) information signaling for current cell. Thereafter, all involved eNBs and UEs under the control of the eNBs will have the same semi-static MBMS dispatching information used for subsequent dispatching over the MAC level of the base stations. Here, it should be emphasized that, a unified processing for coordinating the dispatching results for all base stations is performed in the MCE.

According to the present invention, an interaction procedure is defined over the M2 interface (M2 application protocol) for transmission of the semi-static MBMS dispatching information from the MCE to the eNB.

The interaction procedure as shown in FIG. 3 is used for the delivery of the semi-static MBMS dispatching information and may be defined as a "MBMS dispatching information procedure" for transmitting the MSAP information, the MCS information as well as the transmission sequence implied therein. This interaction procedure includes the delivery of a pair of messages, i.e. the MBMS dispatching information message and the MBMS dispatching information response message. In this interaction procedure, a confirmation mode is used to ensure all involved eNBs will receive the semi-static dispatching information correctly.

As shown in FIG. 3, a semi-static MBMS dispatching information message including said semi-static MBMS dispatching information is transmitted to the eNBs from the MCE via the M2 interface. The eNB feeds the MBMS dispatching information response messages back to the MCE to indicate whether the MBMS dispatching information has been received correctly.

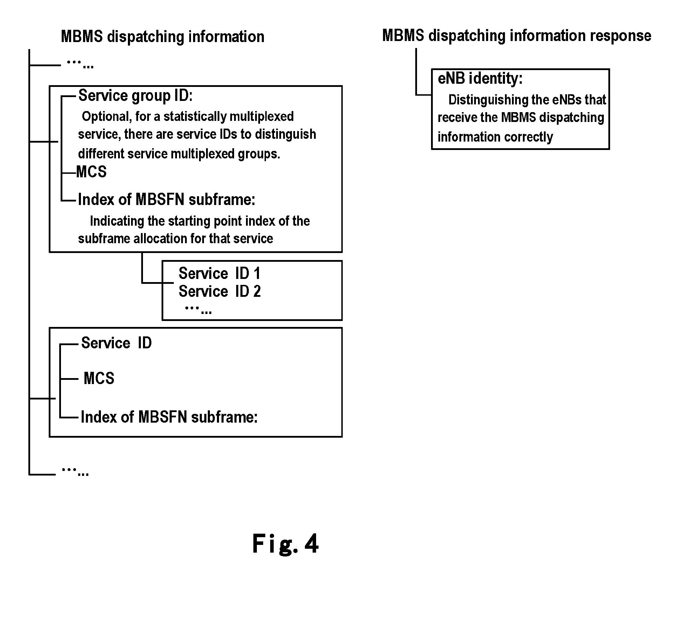

FIG. 4 is schematic diagram of an exemplary message structure of a semi-static MBMS dispatching information message transmitted from the MCE to the base stations according to the present invention.

As shown in FIG. 4, in the MBMS dispatching information message, there are information sets for each MBMS service (or each MBMS service group), including service ID, MSAP information and MCS information. The arrangement sequence of these information sets implies the transmission sequence of these MBMS services or MBMS service groups. This statistically multiplexed service group will be regarded as one service. A unified MCS and MSAP may be defined for the MBMS service group. In this MBMS service group, each MBMS service has an internal transmission sequence which is determined by the MCE according to the QoS requirement of each MBMS service within the MBMS service group, such as priority level or delay etc.

The MBSFN subframe allocation may be a discrete allocation within a dispatching period with numbers and precise locations for them having been predetermined. Therefore, indexes of the MBSFN subframes shown in FIG. 4 may use the starting point of the subframe indexes for each MBMS service as an MSAP indication.

Turning back to FIG. 1, in step 105, each base station dispatches the radio resources dynamically according to the semi-static MBMS dispatching information received from the MCE, as well as actual data volume to be processed by each MBMS service or each MBMS service group.

Specifically, in the step 105, a dynamic dispatching may be performed in MAC layer of each eNB according to actual data volume to be processed by each MBMS service or each MBMS service group waiting for the current dispatching period. Subframes for each MBMS service or each MBMS service group in the MSAP may be based on the QoS requirement, but the actual service data may be burst and the processing volume for each period will thus be variable. For the purpose of maximal utilization of radio resources and impartial processing for each service, a dynamic dispatching within an MSAP is proposed here. Within a dispatching period, the maximal subframe utilization for an MBMS service or an MBMS service group may not exceed the subframe allocation indicated by the MSAP information for the MBMS service or the MBMS service group. In the procedure of this dynamic dispatching, if the actual data volume to be processed for each MBMS service or each MBMS service group does not occupy all the MBSFN subframes allocated for said MBMS service or said MBMS service group indicated by said MSAP information, the MBSFN subframes being unoccupied may be used for unicast services. If the actual data volume to be processed for each MBMS service or each MBMS service group may not fill up all the MBSFN subframes allocated for said MBMS service or said MBMS service group indicated by said MSAP information, it is only needed to add some filling data into the last MBSFN subframe for said MBMS service, or only to add some filling data into the last MBSFN subframe for the last MBMS service among all the MBMS services forming said MBMS service group.

Since a content synchronization mechanism is a compelling mechanism that may ensure that MBSFN transmissions for the involved eNBs will have the same amount of identical content data, and different eNBs may obtain a coincident dispatching result according to the same rule. The dynamic dispatching according to the invention will not affect the synchronization requirement for the MBSFN transmission.

Additionally, the dynamic dispatching result in the MAC layer of an eNB should be informed to the UE instantly. Within each dispatching period, the dynamic dispatching result may be delivered using the first service data transmission through an MAC control element in the frequency band. The MAC control element is a novel MAC control element called "MBMS dispatching information MAC control element". To ensure robustness and correct reception in a UE, a repeating mechanism may be employed during a dispatching period. For the actual dispatching result for each MBMS service or each MBMS service group, it should only list the ending index of MBSFN subframes for each MBMS service or each MBMS service group. Therefore, a UE may explicitly and correctly receive and decode the MBMS services desired for it when receiving the "MBMS dispatching information MAC control element" and in conjunction with the semi-static MBMS dispatching information received previously.

The advantages of the dynamic dispatching mechanism according the invention lie in that:
1) the QoS requirement of each service may be met;
2) the radio resources may be used more efficiently;
3) the impartiality of the processing for each service may be taken into account; and
4) the synchronization requirement in an MBSFN transmission may not be affected.

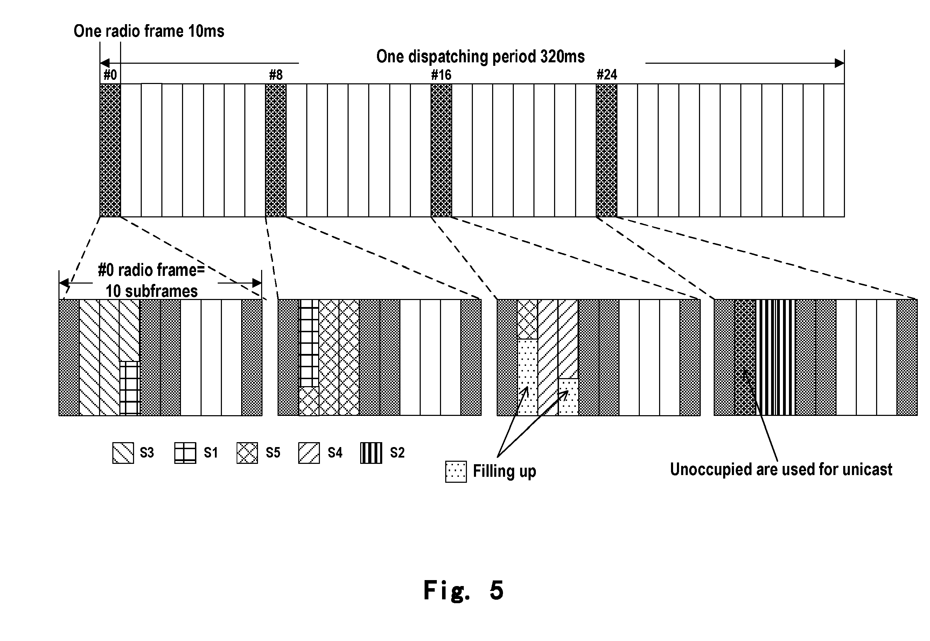

FIG. 5 is schematic diagram of an example of the operation for dynamically dispatching the radio resources used for MBSFN transmissions for MBMS according to the present invention;

For example, as shown in FIG. 5, there are 5 MBMS services taking part in the MBSFN transmission, each with service ID of S1, S2, S3, S4 and S5, respectively. According to their own QoS requirements, S1, S3 and S5 will have the same requirement for BLER, therefore they may use the same MCS and may be multiplexed into one MAC PDU. Therefore, there is a service group {S1, S2, S3} for multiplexing. This service group is defined by a server and the definition is informed to the MCE in a session initial message.

Then, according the invention, the semi-static MBMS dispatching information is determined by the MCE, for example, with respect to the transmission sequence, MSAP information and MCS information for each MBMS service or each MBMS service group.

In this example, the subframe allocation in SIB2 shows "allocation period = 8 radio frames", "offset = 0", "subframe allocation = 111000". Thereupon, within a dispatching period, indexes for the radio frames that contain MBSFN subframes are determined to be #0, #8, #16 and #24. In these radio frames, the subframe indexes for MBSFN subframes are determined to be #1, #2 and #3. The total amount of MBSFN subframes in a dispatching period is 12, as shown in FIG. 5.

The MSAPs for these services are determined by the MCE. In this example, there are 7 subframes for the service group {S1, S2, S3}; and there are 3 subframe for S4 and 2 subframes for S2.

The MCE may further determine the transmission sequence for these services or service groups according to other QoS requirements such as priority level or delay etc. For example, the transmission sequence here is {S3, S1, S5}, S4, S2, wherein the service group is regarded as one service, but the MBMS services within the service group have an internal sequence.

An MCS solution is determined for each MBMS service or each MBMS service group. In particular, the MCS solution for {S3, S1, S5} is MCS1, the MCS solution for S4 is MCS2, and the MCS solution for S2 is MCS3.

Then, a semi-static MBMS dispatching information message including the semi-static MBMS dispatching information is generated and delivered by the MCE to an eNB via an M2 interface using an "MBMS dispatching information procedure". The eNB then delivers the semi-static MBMS dispatching information to a UE via a Uu interface using the RRC signaling (which includes MBMS modified service information, MBMS unmodified service information and Point to Multipoint Radio Bearer (PTM RB) information for current cell).

Finally, the eNB performs the dynamic dispatching on the MAC layer according to the actual data volume processed in this dispatching period. For example, for an MBMS service group, S3 occupies 2.5 subframes, S1 occupies 1.3 subframes, and S5 occupies 2.5 subframes; for an MBMS service, S4 occupies 1.6 subframes, and S2 occupies 2 subframes. For each MBMS service or each MBMS service group, filling data may be added only into the last MBSFN subframe for the MBMS service or the MBMS service group. For example, the filling data for an MBMS service group may be added into the last subframe of S5, while, the filling data for service S4 may be added into the last subframe of the service S4. Then, the actual dynamic dispatching results for these 5 services will be the ending position index of the MBSFN subframes for each MBMS service. Here, it will be 3 for S3, 4 for S1, 6 for S5, 9 for S4 and 12 for S2, as shown in FIG. 5.

Since starting point subframe index is indicated in the MSAP information, the UE may use this starting point subframe index and the ending position index of the MBSFN subframe to obtain the subframe occupation determined for each MBMS service.

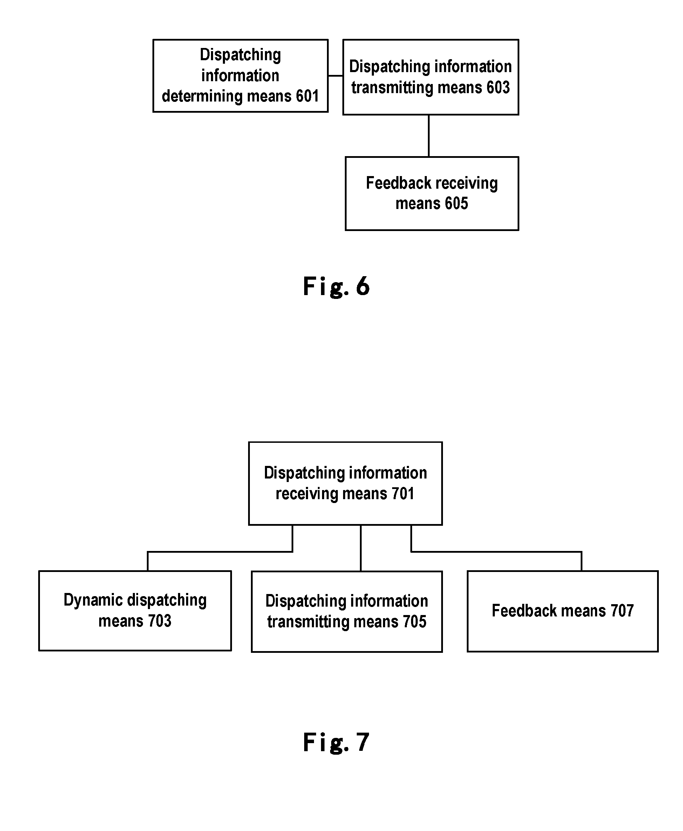

FIG. 6 is a structural diagram of the MCE for dynamically dispatching the radio resources used for MBSFN transmissions for MBMS according to the present invention.

As shown in FIG. 6, the MCE according to the invention includes: a dispatching information determining means 601, a dispatching information transmitting means 603 and a feedback receiving means 605. The dispatching information determining means 601 determines, for the current dispatching period, the semi-static MBMS dispatching information for each MBMS service or each MBMS service group, according to the QoS requirement of each MBMS service or each MBMS service group used for MBSFN transmission, wherein, the MBMS service group is a service group formed by statistically multiplexing a plurality of MBMS services that have the same Block Error Rate (BLER) as their QoS requirements. The dispatching information transmitting means 603 transmits a semi-static MBMS dispatching information message including the semi-static MBMS dispatching information to each eNB in the MBSFN area. The feedback receiving means 605 receives semi-static MBMS dispatching information response messages fed back from each eNB, to determine whether the semi-static MBMS dispatching information message transmitted to the base stations has been received correctly.

FIG. 7 is a structural diagram of the base station for dynamically dispatching the radio resources used for MBSFN transmissions for MBMS according to the present invention.

As shown in FIG. 7, the eNB according to the invention includes: a dispatching information receiving means 701, a dynamic dispatching means 703, a dispatching information transmitting means 705 and a feedback means 707. The dispatching information receiving means 701 receives a semi-static MBMS dispatching information message from an MCE, wherein, the semi-static MBMS dispatching information message includes the semi-static MBMS dispatching information for each MBMS service or each MBMS service group determined by the MCE according to the QoS requirements of each MBMS service or each MBMS service group used for MBSFN transmission. The dynamic dispatching means 703 dynamically dispatches the radio resources for the current dispatching period, according to the semi-static MBMS dispatching information included in the received semi-static MBMS dispatching information message and the actual data volume to be processed by each MBMS service or each MBMS service group. The dispatching information transmitting means 705 transmits the received semi-static MBMS dispatching information to the UE through RRC signaling. The feedback means 707 feeds back a semi-static MBMS dispatching information response message to the MCE to indicate whether the semi-static MBMS dispatching information message has been received correctly.

Although the present invention is described in conjunction with specific embodiments, it will be readily understood by those skilled in the art that various modifications, substitutions and changes may be made to the invention without departing from the spirit and scope of the invention as defined by the claims. Therefore, the present invention is not limited by the above embodiments but by the attached claims and its equivalents.

## Claims

1. A method for dynamically dispatching radio resources used for Multicast Broadcast Single Frequency Network (MBSFN) transmissions for Multimedia Broadcast Multicast Service (MBMS), comprising:
determining , by a Multi-Cell/Multicast Coordination Entity (MCE), for a current dispatching period, semi-static MBMS dispatching information for each MBMS service or each MBMS service group, according to Quality of Service (QoS) requirements of each MBMS service or each MBMS service group used for MBSFN transmission, wherein said MBMS service group is a service group formed by statistically multiplexing a plurality of MBMS services that have the same Block Error Rate as their QoS requirements;
informing, by said MCE, each base station and respective mobile stations under the control of each base station in an MBSFN area of the determined semi-static MBMS dispatching information; and
dispatching, by each base station, the radio resources dynamically according to the semi-static MBMS dispatching information received from the MCE and actual data volume to be processed by each MBMS service or each MBMS service group.

2. The method of claim 1, **characterized in that** said semi-static MBMS dispatching information comprising: transmission sequence information for each MBMS service or each MBMS service group, MBMS subframe allocation pattern (MSAP) information and Modulation and Coding Solution (MCS) information, wherein said MSAP information indicates the maximal range of allocated MBSFN subframes used for MBSFN transmission for each MBMS service or each MBMS service group.

3. The method of claim 1, **characterized in that** there is an internal transmission sequence used for MBSFN transmission for each MBMS service forming the MBMS service group, wherein said internal transmission sequence is determined by the MCE according to the QoS requirements of each MBMS service forming the MBMS service group.

4. The method of claim 2, **characterized in that** said dispatching the radio resources dynamically comprising:
if the actual data volume to be processed by each MBMS service or each MBMS service group does not occupy all the MBSFN subframes allocated for said MBMS service or said MBMS service group indicated by said MSAP information, using MBSFN subframes being unoccupied for unicast services; and
if the actual data volume to be processed by each MBMS service or each MBMS service group does not fill up all the MBSFN subframes allocated for said MBMS service or said MBMS service group indicated by said MSAP information, adding filling data only into the last MBSFN subframe for said MBMS service, or adding filling data only into the last MBSFN subframe for the last MBMS service among all the MBMS services forming said MBMS service group.

5. The method of claim 2, **characterized in that**
for each MBMS service, said MSAP information and said MCS information are determined according to Guaranteed Bit Rate (GBR) or Maximal Bit Rate (MBR) for said MBMS service;
for each MBMS service group, said MSAP information and said MCS information are determined according to the QoS requirements of Aggregative Group Bit Rate and Block Error Rate for said MBMS service group; and
said transmission sequence information is determined according to priority level or delay for each MBMS service or each MBMS service group.

6. The method of claim 3, **characterized in that** said internal transmission sequence is determined by priority level or delay of each MBMS service forming said MBMS service group.

7. The method of claim 1, **characterized in that** informing, by said MCE, each base station and respective mobile stations under the control of each base station in an MBSFN area of the determined semi-static MBMS dispatching information comprising:
informing, by said MCE, each base station in the MBSFN area of said semi-static MBMS dispatching information via an M2 interface; and
transmitting, by each base station, the semi-static MBMS dispatching information received by said base station from the MCE to respective mobile stations through Radio Resource Control (RRC) signaling via a Uu interface.

8. The method of claim 7, **characterized in that** informing, by said MCE, each base station in the MBSFN area of said semi-static MBMS dispatching information via an M2 interface comprises:
transmitting a semi-static MBMS dispatching information message including said semi-static MBMS dispatching information to each base station from said MCE via the M2 interface; and
receiving, by each base station, the semi-static MBMS dispatching information message from the MCE over the M2 interface and feeding back, by the base station, a semi-static MBMS dispatching information response message to indicate whether said semi-static MBMS dispatching information message has been received correctly.

9. The method of claim 7, **characterized in that** said RRC signaling comprises: MBMS modified service information signaling, MBMS unmodified service information signaling and Point to Multipoint Radio Bearer (PTM RB) information signaling for the current cell.

10. The method of claim 1, **characterized in that** result of the dynamic dispatching obtained from the dynamic dispatching of the radio resources by each base station is transmitted to respective mobile stations from the base station utilizing an "MBMS dispatching information media accessing control MAC element", for said mobile stations to receive from the base station and decode desired MBMS service or MBMS service group.

11. A Multi-Cell/Multicast Coordination Entity (MCE) for dynamically dispatching radio resources used for Multicast Broadcast Single Frequency Network (MBSFN) transmissions for Multimedia Broadcast Multicast Service (MBMS), comprising:
a dispatching information determining means for determining, for a current dispatching period, semi-static MBMS dispatching information for each MBMS service or each MBMS service group, according to Quality of Service (QoS) requirements of each MBMS service or each MBMS service group used for MBSFN transmission, wherein said MBMS service group is a service group formed by statistically multiplexing a plurality of MBMS services that have the same Block Error Rate as their QoS requirements; and
a dispatching information transmitting means for transmitting a semi-static MBMS dispatching information message including said semi-static MBMS dispatching information to each base station in an MBSFN area.

12. The MCE of claim 11, **characterized in that** said MCE further comprising:
a feedback receiving means for receiving a semi-static MBMS dispatching information response message fed back from each base station, to determine whether the semi-static MBMS dispatching information message transmitted to the base station has been received correctly.

13. The MCE of claim 11, **characterized in that** said semi-static MBMS dispatching information comprising: transmission sequence information for each MBMS service or each MBMS service group, MBMS subframe allocation pattern (MSAP) information and Modulation and Coding Scheme (MCS) information, wherein said MSAP information indicates the maximal range of allocated MBSFN subframes used for MBSFN transmission for each MBMS service or each MBMS service group.

14. A base station for dynamically dispatching radio resources used for Multicast Broadcast Single Frequency Network (MBSFN) transmissions for Multimedia Broadcast Multicast Service (MBMS), comprising:
a dispatching information receiving means for receiving a semi-static MBMS dispatching information message from a Multi-Cell/Multicast Coordination Entity (MCE), wherein said semi-static MBMS dispatching information message includes the semi-static MBMS dispatching information for each MBMS service or each MBMS service group determined by the MCE according to the Quality of Service (QoS) requirements of each MBMS service or each MBMS service group used for MBSFN transmission; and
a dynamic dispatching means for dynamically dispatching the radio resources, for a current dispatching period, according to the semi-static MBMS dispatching information included in the received semi-static MBMS dispatching information message and actual data volume to be processed by each MBMS service or each MBMS service group.

15. The base station of claim 14, **characterized in that** said base station further comprising:
a dispatching information transmitting means for transmitting the received semi-static MBMS dispatching information to respective mobile station through Radio Resource Control (RRC) signaling; and
a feedback means for feeding back a semi-static MBMS dispatching information response message to the MCE to indicate whether said semi-static MBMS dispatching information message has been received correctly.

16. The base station of claim 14, **characterized in that** said semi-static MBMS dispatching information comprises: transmission sequence information for each MBMS service or each MBMS service group, MBMS subframe allocation pattern (MSAP) information and Modulation and Coding Scheme (MCS) information, wherein said MSAP information indicates the maximal range of allocated MBSFN subframes used for MBSFN transmission for each MBMS service or each MBMS service group.
